# EUROPÄISCHE PATENTSCHRIFT

(11) **EP 3 697 836 B1**
(45) Veröffentlichungstag und Bekanntmachung des Hinweises auf die Patenterteilung: **02.12.2026**
(21) Anmeldenummer: 18789580.0
(22) Anmeldetag: 12.10.2018
(51) Int. Cl.: C08K 9/06, B33Y 70/00

(54) **ZUSAMMENSETZUNG ZUR VERWENDUNG IN ADDITIVEN FERTIGUNGSPROZESSEN**
COMPOSITION FOR USE IN A ADDITIVE MANUFACTURING PROCESSES
COMPOSITION S'UTILISANT DANS DES PROCESSUS DE FABRICATION ADDITIVE

(30) Priorität: 16.10.2017 DE 102017124047
(43) Veröffentlichungstag der Anmeldung: 26.08.2020
(73) Patentinhaber: EOS GmbH Electro Optical Systems, 82152 Krailling (DE)
(72) Erfinder: GESSLER, Monika, 81925 München (DE); PATERNOSTER, Stefan, 82346 Andechs (DE); FRÖHLICH, Daniel, 82166 Gräfelfing (DE)
(74) Vertreter: Beckord & Niedlich Patentanwälte PartG mbB
(86) Internationale Anmeldenummer: PCT/EP2018/077932
(87) Internationale Veröffentlichungsnummer: WO 2019/076767

(56) Entgegenhaltungen:
- DE-A1- 10 251 790
- DATABASE WPI Week 201772, Derwent World Patents Index; AN 2017-62706P, XP002788556
- DATABASE WPI Week 201652, Derwent World Patents Index; AN 2016-233046, XP002788557

## Beschreibung

Die vorliegende Erfindung betrifft eine Zusammensetzung umfassend zumindest ein Polymersystem und zumindest ein Antiagglomerationsmittel, wobei das Polymersystem ausgewählt ist aus zumindest einem thermoplastischen Polymer, wobei die Schüttdichte der Zusammensetzung mehr als 300 g/l beträgt. Des Weiteren betrifft die vorliegende Erfindung ein Verfahren zur Herstellung der erfindungsgemäßen Zusammensetzung sowie deren Verwendung.

Die Bereitstellung von Prototypen und die industrielle Fertigung von Bauteilen gewinnen stetig an Bedeutung. Besonders geeignet sind additive Fertigungsverfahren, die auf der Basis von pulverförmigen Werkstoffen arbeiten, und bei denen schichtweise durch selektives Aufschmelzen und Verfestigen bzw. durch Aufbringen eines Binders und/oder Klebers die gewünschten Strukturen hergestellt werden.

Additive Fertigungsverfahren ermöglichen die Herstellung von plastischen Gegenständen. Der Prozess wird auch als "Additive Manufacturing", "Digital Fabrication" oder "Dreidimensionaler (3D)-Druck" bezeichnet. Schon seit Jahrzehnten wird dieses Verfahren in industriellen Entwicklungsprozessen zur Herstellung von Prototypen verwendet (Rapid Prototyping). Vor einigen Jahren wurde durch den technologischen Fortschritt der Systeme jedoch auch mit der Fertigung von Teilen begonnen, welche den Qualitätsansprüchen eines Endprodukts gerecht werden (Rapid Manufacturing).

In der Praxis wird der Begriff "additive Fertigung" auch oft durch "generative Fertigung" oder "Rapid Technology" ersetzt. Additive Fertigungsverfahren, welche einen pulverförmigen Werkstoff verwenden, sind beispielsweise Sintern, Schmelzen oder Verkleben durch Binder.

Als pulverförmige Werkstoffe zur Herstellung von Formkörpern werden in der Regel Polymersysteme, Metallsysteme und Keramiksysteme eingesetzt. Industrielle Anwender solcher Systeme verlangen eine gute Verarbeitbarkeit, hohe Formtreue und gute mechanische Eigenschaften daraus hergestellter Formkörper.

Das Pulverausgangsmaterial wird in seinen Eigenschaften abhängig von den angestrebten Eigenschaften des herzustellenden Formkörpers gewählt. Von Bedeutung sind eine geeignete Schüttdichte sowie eine ausreichende Rieselfähigkeit des Pulvermaterials.

Als Schüttdichte bezeichnet man die Dichte, d. h. die Masse pro Volumen, eines Gemenges aus einem körnigen Feststoff ("Schüttgut") und einem kontinuierlichen Fluid, welches die Hohlräume zwischen den Partikeln des körnigen Feststoffs ausfüllt. Die Schüttdichte, also die Dichte eines körnigen Feststoffs, welcher nicht durch beispielsweise Stampfen oder Rütteln verdichtet wurde, sondern durch Schütten, kann dabei durch dessen Partikelgröße bzw. Partikeldurchmesser und Partikeleigenschaften beeinflusst werden. Zur Verringerung der Porosität der resultierenden Bauteile weisen üblicherweise eingesetzte Polymersysteme geringe Partikelgrößen bzw. Partikeldurchmesser auf. Dabei ist es allerdings möglich, dass die Partikel agglomerieren. Schüttet man solche Polymersysteme etwa in ein Pulverbett eines Lasersintersystems, können sich Verklumpungen, also inhomogene Partikelverteilungen, bilden, welche nicht kontinuierlich aufschmelzen und wodurch ein Formkörper aus inhomogenem Material erhalten wird, dessen mechanische Stabilität verringert sein kann. Schließlich können beim Schütten auftretende Verklumpungen die Rieselfähigkeit verschlechtern und damit die Dosierbarkeit einschränken.

Daher werden häufig Antiagglomerationsmittel zugesetzt, welche sich an die Partikel des Polymersystems anlagern und Verklumpungen, die beispielsweise bei Schüttvorgängen und/oder beim Auftrag im Pulverbett entstehen können, entgegenwirken, um so ein gleichmäßig verteiltes Pulver zu erhalten, welches im Anschluss einheitlich aufgeschmolzen werden kann, wodurch die mit einem solchen Pulver hergestellten Formkörper verbesserte mechanische Eigenschaften zeigen.

Bei vielen Polymersystemen aus dem Stand der Technik ist jedoch das Einbringen, insbesondere das Dosieren und Beschichten des Pulvers und dessen Aufschmelzverhalten nicht optimal. So können sich beispielsweise beim Aufschmelzen unregelmäßig aufgebrachter Schichten keine homogenen Schmelzefilme ausbilden. Dies führt zu Unregelmäßigkeiten in den darauffolgenden Schichten, wodurch die Genauigkeit bei der Herstellung der Formkörper sowie deren mechanische Eigenschaften beeinträchtigt werden.

Schließlich zeigen Polymersysteme nach dem Sinterprozess häufig eine Neigung zum Verzug. Daher können bei Formkörpern, die aus solchen Polymersystemen hergestellt werden, die gewünschten Maße oft nicht eingehalten werden.

Es ist daher die Aufgabe der vorliegenden Erfindung, eine Zusammensetzung vorzusehen, die insbesondere in additiven Fertigungsprozessen als Werkstoff für die Herstellung von Formkörpern mit einer prozesssicheren mechanischen Stabilität und hoher Formtreue geeignet ist.

Diese Aufgabe wird erfindungsgemäß durch eine Zusammensetzung gemäß Anspruch 1 gelöst, welche zumindest ein Polymersystem und zumindest ein Antiagglomerationsmittel umfasst. Des Weiteren wird die Aufgabe durch ein Verfahren zur Herstellung gemäß Anspruch 14, durch ein Bauteil gemäß Anspruch 17 sowie durch eine Verwendung der erfindungsgemäßen Zusammensetzung gemäß Anspruch 19 gelöst.

Die vorliegende Erfindung betrifft daher eine Zusammensetzung umfassend
(a) zumindest ein Polymersystem und
(b) zumindest zwei Antiagglomerationsmittel,

wobei das Polymersystem ausgewählt ist aus zumindest einem thermoplastischen Polymer, wobei das thermoplastische Polymer ausgewählt ist aus Polyetherimid, Polycarbonat, Polyphenylensulfon, Polyphenylenoxid, Polyethersulfon, Acrylnitril-Butadien-Styrol-Copolymerisat (ABS), Acrylnitril-Styrol-Acrylat-Copolymerisat (ASA), Polyvinylchlorid, Polyacrylat, Polyester, Polyamid, Polyaryletherketon, Polyether, Polyurethan, Polyimid, Polyamidimid und/oder Polyolefin, insbesondere aus Polyurethan, und wobei die Schüttdichte der Zusammensetzung mindestens 300 g/l, bevorzugt mindestens etwa 350 g/l, besonders bevorzugt mindestens etwa 420 g/l, insbesondere mindestens etwa 450 g/l, beträgt und/oder wobei die Schüttdichte bis zu etwa 550 g/l, bevorzugt bis zu etwa 530 g/l, insbesondere bis zu etwa 510 g/l, beträgt,
wobei ein erstes Antiagglomerationsmittel Siliziumdioxid, insbesondere pyrogenes Siliziumdioxid, umfasst und wobei die Partikel des ersten Antiagglomerationsmittels mit mindestens einem Hydrophobierungsmittel auf Basis von zumindest einem Organosilan modifiziert sind,
wobei ein zweites Antiagglomerationsmittel Siliziumdioxid, insbesondere pyrogenes Siliziumdioxid, umfasst und wobei die Partikel des zweiten Antiagglomerationsmittels mit mindestens einem Hydrophobierungsmittel auf Basis von zumindest einem Organosilan modifiziert sind.

In ihrer einfachsten Ausführungsform umfasst eine erfindungsgemäße Zusammensetzung ein Polymersystem und ein erstes und ein zweites Antiagglomerationsmittel, wobei das Polymersystem ausgewählt ist aus zumindest einem thermoplastischen Polymer, wobei das thermoplastische Polymer ausgewählt ist aus Polyetherimid, Polycarbonat, Polyphenylensulfon, Polyphenylenoxid, Polyethersulfon, Acrylnitril-Butadien-Styrol-Copolymerisat (ABS), Acrylnitril-Styrol-Acrylat-Copolymerisat (ASA), Polyvinylchlorid, Polyacrylat, Polyester, Polyamid, Polyaryletherketon, Polyether, Polyurethan, Polyimid, Polyamidimid und/oder Polyolefin, insbesondere aus Polyurethan.

Indem das zumindest eine Antiagglomerationsmittel beispielsweise Verbackungen und so eine Zusammenlagerung von Partikeln des Polymersystems in der Zusammensetzung wirkungsvoll verhindern kann, wird in der Regel der Bildung von Hohlräumen beim Schütten entgegengewirkt und so auch die Schüttdichte der Zusammensetzung vorteilhaft erhöht. Unter Schüttdichte wird dabei das Verhältnis der Masse eines körnigen Feststoffs, welcher durch Schütten und nicht durch beispielsweise Stampfen oder Rütteln verdichtet wurde, zum eingenommenen Schüttvolumen bezeichnet. Die Bestimmung der Schüttdichte ist dem Fachmann bekannt und kann beispielsweise nach der DIN EN ISO 60:2000-01 bestimmt werden.

Erfindungsgemäß weist die Zusammensetzung aus Polymersystem und Antiagglomerationsmittel eine Schüttdichte von mehr als 300 g/l, bevorzugt mindestens etwa 350 g/l, besonders bevorzugt mindestens etwa 420 g/l, insbesondere mindestens etwa 450 g/l, auf. Die Schüttdichte der Zusammensetzung beträgt jedoch höchstens etwa 550 g/l, besonders bevorzugt bis zu etwa 530 g/l, insbesondere bis zu etwa 510 g/l.

Eine solche erfindungsgemäße Zusammensetzung gewährleistet vorteilhaft eine homogene Pulverstruktur, sodass hierdurch eine verbesserte Fließfähigkeit bzw. Rieselfähigkeit und damit ein gleichmäßiger Pulvereintrag ermöglicht werden. Eine gute Fließfähigkeit eines Schüttguts ist dann gegeben, wenn das Schüttgut leicht zum Fließen gebracht werden kann. Die Partikel eines pulverförmigen Schüttguts bleiben dabei im Wesentlichen erhalten oder verändern ihre Form auf dem Transportweg nicht. Die wichtigste Kenngröße hierfür ist die Rieselfähigkeit.

Unter einem Polymersystem wird in der vorliegenden Patentanmeldung zumindest ein Homo- und/oder ein Heteropolymer verstanden, welches aus mehreren Monomeren aufgebaut ist. Während Homopolymere eine kovalente Verkettung gleicher Monomere aufweisen, sind Heteropolymere (auch Copolymere genannt) aus kovalenten Verkettungen unterschiedlicher Monomere aufgebaut. Dabei kann ein Polymersystem gemäß der vorliegenden Erfindung sowohl ein Gemisch aus den oben genannten Homo- und/oder Heteropolymeren bzw. auch mehr als ein Polymersystem umfassen. Ein solches Gemisch wird in der vorliegenden Patentanmeldung auch als Polymerblend bezeichnet.

Heteropolymere im Sinne der vorliegenden Erfindung können dabei ausgewählt sein aus statistischen Copolymeren, in denen die Verteilung der beiden Monomeren in der Kette zufällig ist, aus Gradientcopolymeren, die prinzipiell den statistischen Copolymeren ähnlich sind, in denen jedoch der Anteil des einen Monomers im Verlauf der Kette zu- und des anderen abnimmt, aus alternierenden Copolymeren, in denen sich die Monomere alternierend abwechseln, aus Blockcopolymeren bzw. Segmentcopolymeren, die aus längeren Sequenzen oder Blöcken jedes Monomers bestehen, und aus Propfcopolymeren, bei denen Blöcke eines Monomers auf das Gerüst (Rückgrat) eines anderen Monomers aufgepfropft sind.

Bevorzugt ist das Polymersystem ausgewählt aus zumindest einem Homo- oder Heteropolymeren oder aus einem Polymerblend, wobei das zumindest eine Homo- oder Heteropolymere oder Polymerblend besonders bevorzugt ein teilkristallines Homo- und/oder Heteropolymer und/oder amorphes Homo- und/oder Heteropolymer umfasst. Insbesondere weist dabei ein Heteropolymer oder ein Polymerblend ein oder mehrere Polymersysteme umfassend mindestens zwei verschiedene Wiederholungseinheiten auf.

Gemäß einer insbesondere bevorzugten Ausführungsform umfasst die erfindungsgemäße Zusammensetzung ein Polymersystem, welches bevorzugt ausgewählt ist aus zumindest einem thermoplastischen Polyurethan. Thermoplastische Polyurethane (TPU) sind im Allgemeinen Block-Copolymere, welche aus alternierenden Sequenzen harter und weicher Segmente bestehen, die durch Additionspolymerisation aus (1) Diisocyanaten und kurzkettigen Diolen (sogenannte Kettenverlängerer) und (2) Diisocyanaten und langkettigen Diolen gebildet werden. Über das Verhältnis, die Struktur und das Molekulargewicht der Reaktionskomponenten kann eine Vielzahl verschiedener TPU hergestellt werden.

Polymersysteme besitzen häufig eine positive und/oder negative Partialladung. Insbesondere wenn Partikel des Polymersystems an unterschiedlichen Stellen der Oberfläche unterschiedliche Ladungen aufweisen, kann es zu Wechselwirkungen, beispielsweise durch elektrostatische, magnetische und/oder Van-der-Waals-Kräfte zwischen benachbarten Partikeln kommen, die eine unerwünschte Agglomeration der Polymersystem-Partikel zur Folge haben.

Die erfindungsgemäße Zusammensetzung umfasst daher zumindest zwei Antiagglomerationsmittel. Unter einem Antiagglomerationsmittel wird in der vorliegenden Patentanmeldung ein Stoff in Form von Partikeln verstanden, welcher sich unter anderem an die Oberfläche der Polymersystempartikel anlagern kann. Unter Anlagern wird in dieser Patentanmeldung verstanden, dass Partikel des Antiagglomerationsmittels beispielsweise durch elektrostatische Kräfte, chemische Bindungen (beispielsweise ionische und kovalente Bindungen) und Wasserstoffbrückenbindungen eingehen und/oder magnetische Kräfte und/oder Van-der-Waals-Kräfte mit Partikeln des Polymersystems wechselwirken und so zueinander in relative räumliche Nähe treten, dass Partikel des Polymersystems vorteilhaft nicht direkt miteinander in Kontakt treten, sondern durch Partikel des Antiagglomerationsmittels voneinander getrennt sind. Die auf diese Weise räumlich getrennten Polymersystempartikel bauen im Allgemeinen schwache bis gar keine Wechselwirkungen zueinander auf, sodass durch die Zugabe von Antiagglomerationsmitteln vorteilhaft einer Verklumpung der Zusammensetzung entgegengewirkt wird.

Die erfindungsgemäße Zusammensetzung kann vorteilhaft für additive Fertigungsprozesse eingesetzt werden. Zu additiven Fertigungsprozessen zählen insbesondere Verfahren, die zur Herstellung von Prototypen (Rapid Prototyping) und Bauteilen (Rapid Manufacturing) geeignet sind, bevorzugt aus der Gruppe von Pulverbett-basierten Verfahren umfassend Lasersintern, Highspeed-Sintern, Multi-Jet Fusion, Binder Jetting, selektives Maskensintern oder selektives Laserschmelzen. Insbesondere ist die erfindungsgemäße Zusammensetzung jedoch zur Verwendung für Lasersintern vorgesehen. Der Begriff "Lasersintern" ist dabei gleichbedeutend zu dem Begriff "selektives Lasersintern" zu verstehen; der Letztere ist lediglich die ältere Bezeichnung.

Eine weitere Verwendung der erfindungsgemäßen Zusammensetzung ist ihr Einsatz als Vermahlhilfe, beispielsweise zur Verbesserung der Prozesssicherheit und Erhöhung des Durchsatzes und Verringerung der Partikelgrößen-Heterogenität der Mahlung.

Des Weiteren betrifft die vorliegende Erfindung ein Verfahren zur Herstellung einer erfindungsgemäßen Zusammensetzung, wobei das Verfahren folgende Schritte umfasst:
(i) Bereitstellen zumindest eines Polymersystems, wobei das zumindest eine Polymersystem ausgewählt ist aus zumindest einem thermoplastischen Polymer, wobei das thermoplastische Polymer ausgewählt ist aus Polyetherimid, Polycarbonat, Polyphenylensulfon, Polyphenylenoxid, Polyethersulfon, Acrylnitril-Butadien-Styrol-Copolymerisat (ABS), Acrylnitril-Styrol-Acrylat-Copolymerisat (ASA), Polyvinylchlorid, Polyacrylat, Polyester, Polyamid, Polyaryletherketon, Polyether, Polyurethan, Polyimid, Polyamidimid und/oder Polyolefin, insbesondere aus Polyurethan,
(ii) Zugabe des eines ersten Antiagglomerationsmittels,
(iii) Mischen des zumindest einen Polymersystems mit dem ersten Antiaglomerationsmittel,
(iv) optional Verpacken der Zusammensetzung.

Unter Bereitstellen wird dabei sowohl eine Herstellung vor Ort als auch ein Zuliefern eines Polymersystems verstanden.

Insofern die erfindungsgemäße Zusammensetzung verpackt wird, erfolgt ein Verpackungsvorgang vorteilhaft unter Ausschluss von Feuchtigkeit.

Insofern eine erfindungsgemäße Zusammensetzung mehr als ein Antiagglomerationsmittel umfasst, erfolgt eine Zugabe eines zweiten Antiagglomerationsmittels bevorzugt zu einem Polymersystem, in welchem noch kein Antiagglomerationsmittel eingemischt ist. Im Anschluss erfolgt das Mischen des zumindest einen Polymersystems umfassend das erste Antiagglomerationsmittel (PA1) mit dem zumindest einen Polymersystem umfassend das zweite Antiagglomerationsmittel (PA2) zur Herstellung einer Gesamtmischung umfassend zumindest ein Polymersystem enthaltend zwei Antiagglomerationsmittel. In analoger Weise wird bei Einsatz von drei und mehr Antiagglomerationsmitteln verfahren. Selbstverständlich können dabei die Mischungen PA1 und PA2 (bzw. weitere Mischungen) unterschiedliche Polymersysteme, wie eingangs erläutert, umfassen.

Ein optionales Verpacken einer nach dem erfindungsgemäßen Verfahren hergestellten Zusammensetzung erfolgt dabei bevorzugt unter Ausschluss von Luftfeuchtigkeit, so dass eine anschließende Lagerung der erfindungsgemäßen Zusammensetzung unter reduzierter Feuchtigkeit zur Vermeidung von beispielsweise Verbackungseffekten erfolgen kann, wodurch die Lagerstabilität der erfindungsgemäßen Zusammensetzung verbessert wird. Auch verhindert ein vorteilhaftes Verpackungsmaterial einen Zutritt von Feuchtigkeit, insbesondere von Luftfeuchtigkeit, zur erfindungsgemäßen Zusammensetzung.

Eine nach dem erfindungsgemäßen Verfahren hergestellte Zusammensetzung wird dabei vorteilhaft als verfestigbares Pulvermaterial in einem Verfahren zur schichtweisen Herstellung eines dreidimensionalen Objekts aus pulverförmigem Material verwendet, bei dem aufeinander folgende Schichten des zu bildenden Objekts aus diesem verfestigbaren Pulvermaterial nacheinander an entsprechenden bzw. vorgegebenen Stellen durch den Eintrag von Energie, bevorzugt von elektromagnetischer Strahlung, insbesondere durch den Eintrag von Laserlicht, verfestigt werden.

Auch umfasst die vorliegende Erfindung eine Zusammensetzung, insbesondere für Lasersinterverfahren, welche nach dem vorstehend beschriebenen Verfahren erhältlich ist.

Schließlich wird eine erfindungsgemäße Zusammensetzung zum Herstellen eines Bauteils, insbesondere eines dreidimensionalen Objekts, durch schichtweises Aufbringen und selektives Verfestigen eines Aufbaumaterials, vorzugsweise eines Pulvers, verwendet. Unter der Bezeichnung "Verfestigen" ist dabei ein zumindest teilweises An- oder Aufschmelzen mit anschließendem Erstarren bzw. Wiederverfestigen des Aufbaumaterials zu verstehen. Dabei weist ein vorteilhaftes Verfahren zumindest folgende Schritte auf:
(i) Bereitstellen des Aufbaumaterials,
(ii) Aufbringen einer Schicht des Aufbaumaterials auf ein Baufeld,
(iii) selektives Verfestigen der aufgebrachten Schicht des Aufbaumaterials an Stellen, die einem Querschnitt des herzustellenden Objekts entsprechen, bevorzugt mittels einer Bestrahlungseinheit, und
(iv) Absenken des Trägers und Wiederholen der Schritte des Aufbringens und des Verfestigens, bis das Bauteil, insbesondere das dreidimensionale Objekt, fertiggestellt ist.

Unter Aufbaumaterial wird in der vorliegenden Patentanmeldung ein Pulver bzw. ein verfestigbares Pulvermaterial verstanden, welches mittels additiver Fertigungsverfahren, insbesondere mittels Lasersintern bzw. Laserschmelzen, zu flexiblen Formkörpern verfestigt werden kann. Als derartiges Aufbaumaterial eignet sich insbesondere die erfindungsgemäße Zusammensetzung.

Als Baufeld dient dabei eine Ebene, welche sich auf einem Träger innerhalb einer Maschine zur additiven Fertigung in einem bestimmten Abstand zu einer darüber angebrachten Bestrahlungseinheit, die zum Verfestigen des Aufbaumaterials geeignet ist, befindet. Auf dem Träger wird das Aufbaumaterial so positioniert, dass dessen oberste Schicht mit der Ebene übereinstimmt, welche verfestigt werden soll. Der Träger kann dabei im Laufe des Fertigungsverfahrens, insbesondere des Lasersinterns, so eingestellt werden, dass jede neu aufgebrachte Schicht des Aufbaumaterials dieselbe Entfernung zur Bestrahlungseinheit aufweist und auf diese Weise durch Einwirkung der Bestrahlungseinheit verfestigt werden kann.

Eine Verwendung der erfindungsgemäßen Zusammensetzung erfolgt sowohl im Rapid Prototyping als auch im Rapid Manufacturing. Hierbei werden beispielsweise additive Fertigungsverfahren, insbesondere Lasersinterverfahren, eingesetzt, bei welchen dreidimensionale Objekte schichtweise durch selektives Projizieren eines Laserstrahls mit einer gewünschten Energie auf ein Pulverbett aus pulverförmigen Werkstoffen gebildet werden. Prototypen oder Fertigungsteile können durch diesen Prozess zeit- und kosteneffizient hergestellt werden.

Mit Rapid Manufacturing sind insbesondere Verfahren zur Herstellung von Bauteilen gemeint, also die Herstellung von mehr als einem gleichen Teil, bei dem aber die Produktion z. B. mittels eines Spritzgießwerkzeugs nicht wirtschaftlich oder aufgrund der Geometrie des Bauteils nicht möglich ist, vor allem, wenn die Teile eine sehr komplexe Gestaltung aufweisen. Beispiele hierfür sind Teile für hochwertige PKW, Renn- oder Rallyefahrzeuge, die nur in kleinen Stückzahlen hergestellt werden, oder Ersatzteile für den Motorsport, bei denen neben den kleinen Stückzahlen auch der Zeitpunkt der Verfügbarkeit eine Rolle spielt. Branchen, in welchen die erfindungsgemäßen Teile eingesetzt werden, können z. B. die Luft- und Raumfahrtindustrie sein, die Medizintechnik, der Maschinenbau, der Automobilbau, die Sportindustrie, die Haushaltswarenindustrie, Elektroindustrie bzw. Lifestyle. Ebenfalls von Bedeutung ist die Herstellung einer Vielzahl ähnlicher Bauteile, beispielsweise von personalisierten Bauteilen, wie Prothesen, (Innenohr)Hörgeräte und dergleichen, deren Geometrie individuell an den Träger angepasst werden kann.

Weitere besonders vorteilhafte Ausgestaltungen und Weiterbildungen der Erfindung ergeben sich aus den abhängigen Ansprüchen sowie der nachfolgenden Beschreibung, wobei die Patentansprüche einer bestimmten Kategorie auch gemäß den abhängigen Ansprüchen einer anderen Kategorie weitergebildet sein können und Merkmale verschiedener Ausführungsbeispiele zu neuen Ausführungsbeispielen kombiniert werden können.

Wie eingangs erwähnt, umfasst die erfindungsgemäße Zusammensetzung zumindest ein Antiagglomerationsmittel. Ein solches Antiagglomerationsmittel kann ausgewählt sein aus der Gruppe von Metallseifen. Metallseifen werden beispielsweise in den Serien CEASIT (Calciumstearat), ZINCUM (Zinkstearat) und MAGNESIUMSTEARAT (Magnesiumstearat) von der Firma Bärlocher (Deutschland), oder in der Serie Licomont^{®} in verschiedenen Modifikationen von Clariant (Deutschland) vertrieben. Bevorzugt ist ein Antiagglomerationsmittel ausgewählt aus einem Siliziumdioxid, Stearat, Tricalciumphosphat, Calciumsilicat, Aluminiumoxid, Magnesiumoxid, Magnesiumcarbonat, Zinkoxid oder Mischungen dergleichen.

Erfindungsgemäß umfasst ein erstes Antiagglomerationsmittel Siliziumdioxid. Dabei kann es sich um durch einen nasschemischen Fällungsprozess hergestelltes oder um pyrogenes Siliziumdioxid handeln. Besonders bevorzugt handelt es sich bei dem Siliziumdioxid jedoch um pyrogenes Siliziumdioxid. Pyrogene Siliziumdioxide werden beispielsweise in der Aerosil^{®} Serie von Evonik (Deutschland) oder HDK^{®} von Wacker Chemie (Deutschland) vertrieben, wie später ausgeführt.

Unter einem pyrogenen Siliziumdioxid wird in der vorliegenden Patentanmeldung Siliziumdioxid verstanden, welches gemäß bekannter Verfahren beispielsweise durch Flammenhydrolyse mittels Zugabe von flüssigem Tetrachlorsilan in die Wasserstoffflamme hergestellt wurde. Im Folgenden wird Siliziumdioxid auch als Kieselsäure bezeichnet.

Pyrogene Kieselsäure ist im unmodifizierten Zustand mit Silanolgruppen (-SiOH) bedeckt, wodurch die Oberfläche der Kieselsäure im Allgemeinen einen hydrophilen Charakter aufweist. Um die Anzahl der häufig zwischen Silanolgruppen auftretenden Wasserstoffbrückenbindungen zu reduzieren bzw. interpartikuläre elektrostatische Anziehungskräfte zu verringern, sind die Silanolgruppen an der Oberfläche der Partikel des zumindest einen Antiagglomerationsmittels in einer bevorzugten Ausführungsform mit mindestens einem Hydrophobierungsmittel, insbesondere auf Basis von Organosilanen, modifiziert.

Unter Organosilanen werden in der vorliegenden Patentanmeldung Verbindungen verstanden, die entweder direkte Silizium-Kohlenstoff-Bindungen aufweisen oder bei denen der Kohlenstoff über Sauerstoff-, Stickstoff- oder Schwefel-Atome an das Silizium geknüpft ist.

Durch die Modifizierung der Oberfläche der Partikel des ersten Antiagglomerationsmittels mit Organosilanen wird vorteilhaft die Anzahl der Silanolgruppen signifikant reduziert, was zur Folge hat, dass die Oberfläche der Kieselsäure einen mehr oder weniger stark ausgeprägten hydrophoben Charakter erhält.

Die Dichte der Silanolgruppen auf der Oberfläche des zumindest einen Antiagglomerationsmittels liegt dabei nach deren Modifizierung mit einem Organosilan vorteilhaft bei unter 0,5 pro nm², sodass interpartikuläre Wasserstoffbrückenbindungen vernachlässigt werden können und die modifizierte Kieselsäure einen hydrophoben Charakter aufweist.

Dieser hydrophobe Charakter ist wünschenswert, weil die mit mindestens einem Hydrophobierungsmittel modifizierten Antiagglomerationsmittel-Partikel, die in oben beschriebener Weise vorteilhaft die Polymersystempartikel voneinander trennen, im Allgemeinen die Haftkräfte zwischen den Polymersystem-Partikeln wirksamer herabsetzen können als hydrophile Antiagglomerationsmittel-Partikel. Somit wird eine bessere Fließfähigkeit der Zusammensetzung ermöglicht. Dies spielt insbesondere auch für hygroskopische Polymersysteme bzw. -partikel eine Rolle, da sich hydrophobe Antiagglomerationsmittel in den Wasserfilm, welcher üblicherweise die hygroskopischen Polymerpartikel umgibt, einlagern und so die Polymerpartikel voneinander separieren.

Eine erfindungsgemäße Zusammensetzung weist ein zweites Antiagglomerationsmittel auf und ermöglicht so vorteilhaft eine weiter verbesserte Abstimmung der physikalischen Eigenschaften, beispielsweise hinsichtlich der elektrostatischen, der magnetischen und/oder der Van-der-Waals-Kräfte der Antiagglomerationsmittel, auf das bzw. die Polymersystem(e) und damit eine verbesserte Verarbeitbarkeit der Zusammensetzung, insbesondere in Lasersinterprozessen.

Gemäß einer insbesondere bevorzugten Ausführungsform handelt es sich auch bei dem zweiten Antiagglomerationsmittel um ein Siliziumdioxid, insbesondere um pyrogenes Siliziumdioxid, welches an dessen Partikeloberfläche mit mindestens einem Hydrophobierungsmittel, insbesondere auf Basis von Organosilanen, modifiziert ist.

Selbstverständlich kann eine erfindungsgemäße Zusammensetzung auch mehr als zwei Antiagglomerationsmittel aufweisen, jedoch ist es bevorzugt, dass die erfindungsgemäße Zusammensetzung lediglich zwei Antiagglomerationsmittel umfasst.

Dabei kann/können das/die zumindest eine bzw. die zwei oder mehr Antiagglomerationsmittel prinzipiell mit einem oder auch mit mehreren unterschiedlichen Hydrophobierungsmitteln behandelt sein.

In einer bevorzugten Ausführungsform sind die Partikel, insbesondere die Silanolgruppen auf der Oberfläche des ersten Antiagglomerationsmittels mit einem ersten Hydrophobierungsmittel auf Basis von Organosilanen modifiziert, welches ausgewählt ist aus Alkoxysilanen, Silazanen und/oder Siloxanen, insbesondere aus Polydimethylsiloxan (PDMS) und/oder Hexamethyldisilazan (HMDS), insbesondere bevorzugt aus Hexamethyldisilazan. Ein solches hydrophobiertes Antiagglomerationsmittel reduziert die kohäsiven Wechselwirkungen, die bei feinen Polymerpartikeln stärker ausgeprägt sind als die Gravitationskräfte und damit zu Verbackungen führen können. Gemäß einer besonders bevorzugten Ausführungsform ist das erste Antiagglomerationsmittel mit lediglich einem Hydrophobierungsmittel modifiziert, welches insbesondere aus HMDS ausgewählt ist.

In einer besonders bevorzugten Ausführungsform sind die Partikel des zweiten Antiagglomerationsmittels an deren Oberfläche mit einem zweiten Hydrophobierungsmittel modifiziert, welches wiederum intramolekulare und/oder intermolekulare Wechselwirkungen mit dem zweiten Antiagglomerationsmittel eingehen kann. Dieses zweite Hydrophobierungsmittel kann ausgewählt sein aus Polydimethylsiloxan (PDMS) und/oder Hexamethyldisilazan (HMDS). Gemäß einer insbesondere bevorzugten Ausführungsform ist das zweite Antiagglomerationsmittel mit lediglich einem Hydrophobierungsmittel modifiziert, welches ganz besonders bevorzugt aus PDMS ausgewählt ist.

Prinzipiell können die Partikel des ersten und/oder zweiten Antiagglomierationsmittels an deren Oberfläche eine zusätzliche Funktionalisierung aufweisen. Gemäß einer bevorzugten Ausführungsform können die Partikel des ersten und/oder des zweiten Antiagglomerationsmittels an deren Oberfläche zusätzlich mit Amino-, Amid- und/oder quartären Ammonium-Gruppen funktionalisiert sein, um so beispielsweise einer möglicherweise bei der Herstellung durch Reibung an der Behälterwand entstehenden triboelektrischen Aufladung entgegenzuwirken.

Die zumindest zwei in oben beschriebener Weise modifizierten Antiagglomerationsmittel weisen vorteilhaft besonders gute Anlagerungseigenschaften an die Partikel des zumindest einen Polymersystems, insbesondere umfassend thermoplastisches Polyurethan, auf, und vermitteln so eine deutliche Verbesserung der Fließfähigkeit bzw. der Rieselfähigkeit der Zusammensetzung.

Insofern eine Zusammensetzung das erste und das zweite Antiagglomerationsmittel umfasst, können die Fließeigenschaften der Zusammensetzung auch durch das Mischungsverhältnis der Antiagglomerationsmittel beeinflusst werden.

Gemäß einer bevorzugten Ausführungsform weist dabei das erste Antiagglomerationsmittel zu dem zweiten Antiagglomerationsmittel ein Gewichtsverhältnis von mindestens etwa 1:1, bevorzugt von mindestens etwa 2:1, auf. Das Gewichtsverhältnis des ersten Antiagglomerationsmittels zum zweiten Antiagglomerationsmittel liegt jedoch bei höchstens etwa 1:3, bevorzugt bei höchstens etwa 1:2. Dabei bestimmt der Dividend der angegebenen Verhältnisse jeweils den Gewichtsteil des ersten Antiagglomerationsmittels und der Divisor den Gewichtsteil des zweiten Antiagglomerationsmittels.

Es hat sich gezeigt, dass der Herstellungsprozess zur Mischung der zumindest zwei Antiagglomerationsmittel Einfluss auf die Fließeigenschaften der Zusammensetzung haben kann. Prinzipiell können dabei die Antiagglomerationsmittel zunächst in einem Prozess gemischt werden und dann mit dem zumindest einen Polymersystem gemischt werden. Jedoch ist es bevorzugt, dass die Antiagglomerationsmittel nacheinander zu dem Polymersystem zugegeben werden.

Gemäß einer bevorzugten Ausführungsform enthält eine vorteilhafte Zusammensetzung das zumindest eine Antiagglomerationsmittel oder gegebenenfalls ein zweites Antiagglomerationsmittel zu einem Gesamt-Gewichtsanteil von mindestens etwa 0,01 %, bevorzugt von mindestens etwa 0,03 %. Unter einem Gesamt-Gewichtsanteil wird dabei der gesamte Gewichtsanteil aller eingesetzten Antiagglomerationsmittel verstanden.

Um jedoch einen möglichen unerwünschten Einfluss des zumindest einen Antiagglomerationsmittels zu minimieren, welcher beispielsweise zu einer Abschirmung der Polymerpartikel führen und so das Zusammenfließen der Schmelze erschweren kann, sollte das zumindest eine Antiagglomerationsmittel nur in einer Menge zugefügt werden, die ausreicht, um eine gute Dosierbarkeit der Zusammensetzung zu gewährleisten. Vorteilhaft liegt daher der Gesamt-Gewichtsanteil des zumindest einen Antiagglomerationsmittels oder gegebenenfalls eines zweiten Antiagglomerationsmittels in der Zusammensetzung bei insgesamt höchstens etwa 1 Gew.-%, bevorzugt bei höchstens etwa 0,8 Gew.-%, insbesondere bei höchstens etwa 0,5 Gew.-%, insbesondere bevorzugt bei höchstens etwa 0,2 % Gew.-%.

Um eine ausreichende Anlagerung der Partikel des zumindest einen Antiagglomerationsmittels an die Partikel des zumindest einen Polymersystems zu gewährleisten, hat es sich ferner als vorteilhaft erwiesen, dass die Partikel des Antiagglomerationsmittels eine möglichst große Oberfläche aufweisen. Die Oberfläche kann dabei beispielsweise durch Gasadsorption nach dem Prinzip von Brunauer, Emmet und Teller (BET) ermittelt werden; die herangezogene Norm ist DIN EN ISO 9277. Die nach dieser Methode bestimmte Partikeloberfläche wird auch als BET-Oberfläche bezeichnet.

Gemäß einer bevorzugten Ausführungsform liegt die BET-Oberfläche des zumindest einen Antiagglomerationsmittels daher vorteilhaft bei mindestens etwa 200 m²/g, bevorzugt bei mindestens etwa 230 m²/g, und/oder bei höchstens etwa 350 m²/g, besonders bevorzugt bei höchstens etwa 330 m²/g.

In diesem Zusammenhang soll auch die Partikelgröße bzw. der Partikeldurchmesser definiert sein. Hierbei ist allerdings zu erwähnen, dass sich bei Antiagglomerationsmitteln, insbesondere bei pyrogenem Siliziumdioxid, die in der Regel nanoskaligen Primärpartikel während des Herstellungsprozesses zu größeren Aggregaten und/oder zu Agglomeraten zusammenfinden. Bei der Bestimmung der mittleren Teilchengröße des zumindest einen Antiagglomerationsmittels werden daher üblicherweise Aggregate und/oder Agglomerate gefunden.

Um den Partikeln des Antiagglomerationsmittels eine gleichmäßige Anlagerung an die Polymersystempartikel zu ermöglichen, weist das zumindest eine Antiagglomerationsmittel und gegebenenfalls ein zweites Antiagglomerationsmittel in einer bevorzugten Ausführungsform einen mittleren Durchmesser der Agglomeratpartikel d50 von mindestens etwa 100 nm, bevorzugt von mindestens etwa 200 nm, insbesondere von mindestens etwa 250 nm, auf. Der mittlere Durchmesser der Agglomeratpartikel d50 liegt jedoch bei höchstens etwa 500 nm, bevorzugt bei höchstens etwa 400 nm, insbesondere bei höchstens etwa 300 nm.

Der mittlere Durchmesser der Agglomeratpartikel d50 gibt dabei an, dass 50 % der Agglomeratpartikel unterhalb des genannten Partikeldurchmessers liegen. Geeignete Methoden zur Bestimmung des mittleren Durchmessers d50 der Agglomeratpartikel sind dem Fachmann bekannt und können beispielsweise mittels PCS (Photonenkorrelationsspektrometrie), Rasterelektronenmikroskopie (REM) oder Transmissionselektronenmikroskopie (TEM) erfolgen.

Die Anlagerung der Partikel des zumindest einen Antiagglomerationsmittels an die Polymersystem-Partikel hängt dabei allerdings nicht nur vom mittleren Agglomeratpartikeldurchmesser des zumindest einen Antiagglomerationsmittels ab, sondern auch vom Verhältnis der mittleren Agglomeratpartikeldurchmesser des zumindest einen Antiagglomerationsmittels zum mittleren Durchmesser d50 der Partikel des zumindest einen Polymersystems. Geeignete Methoden zur Bestimmung des mittleren Durchmessers der Partikel eines Polymersystems sind dem Fachmann bekannt und können beispielsweise mittels Laserbeugung oder Rasterelektronenmikroskopie erfolgen.

Dabei hat sich herausgestellt, dass die Prozessierbarkeit, insbesondere die Beschichtbarkeit und die mechanischen Eigenschaften der resultierenden Bauteile, verbessert werden kann. Besonders vorteilhaft ist dies bei Verwendung eines Polymersystems umfassend insbesondere ein TPU, welches durch Mahlprozesse zerkleinert wurde, und welchem zumindest ein Antiagglomerationsmittel zugegeben wurde.

Gemäß einer bevorzugten Ausführungsform weist daher der mittlere Durchmesser der Partikel d50 des zumindest einen Polymersystems, insbesondere eines thermoplastischen Polyurethans, zum mittleren Durchmesser der Agglomeratpartikel d50 des zumindest einen Antiagglomerationsmittels ein Verhältnis von mindestens etwa 100:1, bevorzugt von mindestens etwa 500:1, auf. Dabei liegt das Verhältnis des mittleren Durchmessers der Partikel d50 des zumindest einen Polymersystems, insbesondere des thermoplastischen Polyurethans, zum mittleren Durchmesser der Agglomeratpartikel d50 des zumindest einen Antiagglomerationsmittels jedoch bei höchstens etwa 5000:1, bevorzugt bei höchstens etwa 1000:1.

Insofern eine Zusammensetzung zwei oder mehr Antiagglomerationsmittel umfasst, bezieht sich das genannte Verhältnis des mittleren Durchmessers der Partikel d50 des zumindest einen Polymersystems, insbesondere des thermoplastischen Polyurethans, zum mittleren Durchmesser der Agglomeratpartikel d50 des zumindest einen Antiagglomerationsmittels vorteilhaft auf den mittleren Durchmesser der Partikel d50 des zumindest einen Polymersystems, insbesondere des thermoplastischen Polyurethans, zum mittleren Durchmesser der Agglomeratpartikel d50 der zumindest zwei Antiagglomerationsmittel.

Wie oben erwähnt, sind erfindungsgemäße Zusammensetzungen für additive Fertigungsprozesse, insbesondere für Lasersinterverfahren, geeignet. Üblicherweise wird die Zielumgebung, beispielsweise das Pulverbett der Bestrahlungseinheit, insbesondere des Laserstrahls, bereits vor deren Einsatz aufgeheizt, sodass die Temperatur des Pulverausgangsmaterials nahe seinem Schmelzpunkt liegt und bereits ein nur geringer Energieeintrag ausreicht, um den Gesamt-Energieeintrag so weit zu erhöhen, dass die Partikel miteinander koalieren bzw, sich verfestigen. Dabei können ferner auch energieabsorbierende und/oder energiereflektierende Stoffe auf die Zielumgebung der Bestrahlungseinheit aufgetragen werden, wie beispielsweise aus den Prozessen des Highspeed-Sinterns bzw. der Multi-Jet Fusion bekannt ist.

Die durch das Aufheizen oder den Laser eingetragene Erwärmung kann jedoch dazu führen, dass sich einzelne Bestandteile der Zusammensetzung, wie beispielsweise das Polymersystem, zersetzen. Daher weisen vorteilhafte Zusammensetzungen einen Schmelzpunkt auf, der bei unter 450 °C liegt. Bevorzugt liegt der Schmelzpunkt der Zusammensetzung im Bereich von etwa 80 bis etwa 400 °C.

Unter "Aufschmelzen" wird dabei der Prozess verstanden, bei dem das Pulver während eines additiven Fertigungsprozesses, beispielsweise im Pulverbett, durch Eintrag von Energie, bevorzugt mittels elektromagnetischer Wellen, insbesondere durch Laserstrahlen, zumindest teilweise geschmolzen wird. Die erfindungsgemäße Zusammensetzung gewährleistet dabei ein zumindest teilweises Aufschmelzen und Fertigung von prozesssicheren Formkörpern mit hoher mechanischer Stabilität und Formtreue.

Es hat sich zudem gezeigt, dass der Schmelzpunkt der Zusammensetzung durch die Wahl des Polymersystems weiter herabgesenkt werden kann. Gemäß einer besonders bevorzugten Ausführungsform liegt der Schmelzpunkt der Zusammensetzung, insbesondere umfassend thermoplastische Polyurethane, daher bei mindestens etwa 100 °C, bevorzugt bei mindestens etwa 120°C, besonders bevorzugt bei mindestens etwa 140 °C, und/oder bei höchstens etwa 200 °C, bevorzugt bei höchstens etwa 180 °C, besonders bevorzugt bei höchstens etwa 160 °C.

Es hat sich weiter gezeigt, dass die Zugfestigkeit und Bruchdehnung als Maß für die Prozessierbarkeit der erfindungsgemäßen Zusammensetzung von Nutzen sein kann. Die Zugfestigkeit und Bruchdehnung sind Werkstoffeigenschaften. Die Zugfestigkeit kennzeichnet dabei die maximale mechanische Zugspannung, die im Werkstoff auftreten kann; die Bruchdehnung kennzeichnet die Verformungsfähigkeit eines Werkstoffs im plastischen Bereich (auch Duktilität genannt) bis zum Bruch. Gemäß einer weiter bevorzugten Ausführungsform weist die Zusammensetzung eine Zugfestigkeit von mindestens etwa 5 MPa, bevorzugt von mindestens etwa 25 MPa, insbesondere von mindestens etwa 50 MPa, und/oder von höchstens etwa 150 MPa, bevorzugt von höchstens etwa 100 MPa, insbesondere von höchstens etwa 75 MPa, auf. Bevorzugte Werte für die Bruchdehnung der erfindungsgemäßen Zusammensetzung liegen dabei bei mindestens etwa 1 %, bevorzugt von mindestens etwa 5 %, insbesondere von mindestens etwa 50 %, und/oder von höchstens etwa 500 %, bevorzugt von höchstens etwa 250 %, insbesondere von höchstens etwa 100 %. Die Bestimmung der Zugfestigkeit und Bruchdehnung kann mit Hilfe des sogenannten Zugversuchs nach DIN EN ISO 527 ermittelt werden und ist dem Fachmann bekannt.

Ferner kann die erfindungsgemäße Zusammensetzung auf deren Dosierbarkeit im kalten und warmen Zustand in der Lasersinteranlage, deren Schichtauftrag und Pulverbettzustand im kalten und warmen Zustand, deren Schichtauftrag im laufenden Lasersinterprozess, insbesondere deren Beschichtung auf belichteten Flächen, der Maßhaltigkeit der erhaltenen Probekörper und deren mechanischen Eigenschaften bewertet werden.

Gemäß einer weiter bevorzugten Ausführungsform erfolgt die Herstellung einer bevorzugten Zusammensetzung wie folgt:
(i) Sieben des zumindest einen bzw. der zumindest zwei Antiagglomerationsmittel,
(ii) Zugabe bzw. Einmischen des ersten Antiagglomerationsmittels zu dem thermoplastischen Polymer, wobei das thermoplastische Polymer bevorzugt ausgewählt ist aus Polyetherimid, Polycarbonat, Polyphenylensulfon, Polyphenylenoxid, Polyethersulfon, Acrylnitril-Butadien-Styrol-Copolymerisat (ABS), Acrylnitril-Styrol-Acrylat-Copolymerisat (ASA), Polyvinylchlorid, Polyacrylat, Polyester, Polyamid, Polyaryletherketon, Polyether, Polyurethan, Polyimid, Polyamidimid, Polyolefin, insbesondere aus Polyurethan, und wobei die Zugabe bzw. das Einmischen bevorzugt in einem Mischaggregat erfolgt.

Ein bevorzugtes Mischaggregat berücksichtigt dabei vorteilhaft eine geringe Scherung des thermoplastischen Polymers und des Antiagglomerationsmittels. Geeignete Mischaggregate können beispielsweise ausgewählt sein aus einem Paddelmischer oder einem Nautamischer und dergleichen.

Gemäß einem besonders bevorzugten Verfahren zur Herstellung der erfindungsgemäßen Zusammensetzung wird zunächst eine erste Mischung des zumindest einen Polymersystems und des ersten Antiagglomerationsmittels in einer kleineren Menge, beispielsweise in einer Menge von ungefähr 10 bis 100 g, des zumindest einen Polymersystems zur Herstellung einer sogenannten Vormischung hergestellt. Die Herstellung einer solchen Vormischung erfolgt beispielsweise in einem Taumelmischer. Anschließend kann die Vormischung, beispielsweise mittels eines oben genannten Mischaggregats, zum Erhalt der Endmischung bzw. der erfindungsgemäßen Zusammensetzung in das Polymersystem eingemischt werden. Insofern eine besonders bevorzugte Zusammensetzung zwei Antiagglomerationsmittel umfasst, so wird in gleicher Weise wie oben beschrieben zunächst eine Vormischung aus dem zweiten Antiagglomerationsmittel und dem Polymersystem hergestellt und nachfolgend zum Erhalt der Endmischung in das Polymersystem eingemischt.

Ein solches besonders bevorzugtes Verfahren bei der Herstellung der erfindungsgemäßen Zusammensetzung ermöglicht eine homogene Mischung der Partikel des thermoplastischen Polymersystems mit dem zumindest einen bzw. mit den zumindest zwei Antiagglomerationsmitteln, wodurch sich vorteilhafte Fließeigenschaften unter Vermeidung von Verbackungseffekten und schließlich ein homogenes Aufschmelzverhalten der Zusammensetzung ergeben.

Weiterhin ist es vorteilhaft, wenn die Zusammensetzung zumindest ein Additiv umfasst, welches eine Anpassung der mechanischen, elektrischen, magnetischen und/oder ästhetischen Pulver- und Produkteigenschaften erlaubt. In einer bevorzugten Ausführungsform umfasst die Zusammensetzung zumindest ein organisches und/oder anorganisches Additiv wie beispielsweise Glas-, Metall-, zum Beispiel Aluminium- und/oder Kupfer- oder Eisen-, Keramikpartikel oder Pigmente zur Variation der Farbe, bevorzugt Titandioxid oder Ruß. Alternativ oder zusätzlich kann das Additiv auch aus einer Faser, wie beispielsweise einer Carbon- oder Glasfaser, ausgewählt sein. Dadurch kann auch das Absorptionsverhalten des Pulvers beeinflusst werden.

Neben einer Funktionalisierung durch den Zusatz von beispielsweise Pigmenten können prinzipiell auch Verbindungen mit bestimmten funktionellen Eigenschaften in einer oder mehreren der Schichten oder im gesamten Formkörper vorliegen. Eine Funktionalisierung könnte z. B. darin bestehen, dass der ganze Formkörper, eine oder mehrere Schichten des Formkörpers oder auch nur Teile einer oder mehrerer Schichten des Formkörpers elektrisch leitend ausgerüstet werden. Diese Funktionalisierung kann durch leitfähige Pigmente, wie z. B. Metallpulver, oder durch Verwendung von leitfähigen Polymeren, wie z. B. durch den Zusatz von Polyanilin, erreicht werden. Auf diese Weise sind Formkörper, die Leiterbahnen aufweisen, erhältlich, wobei diese sowohl oberflächlich als auch innerhalb des Formkörpers vorhanden sein können.

Weitere Merkmale der Erfindung ergeben sich aus der nachfolgenden Beschreibung von Ausführungsbeispielen in Verbindung mit den Ansprüchen. Es sei darauf hingewiesen, dass die Erfindung nicht auf die Ausführungsformen der beschriebenen Ausführungsbeispiele beschränkt, sondern durch den Umfang der beiliegenden Patentansprüche bestimmt ist. Insbesondere können die einzelnen Merkmale bei erfindungsgemäßen Ausführungsformen in anderer Kombination als bei den untenstehend angeführten Beispielen verwirklicht sein.

### Beispiele

### Beispiel 1:

Herstellung einer Vergleichs- Zusammensetzung: 0,15 Gew.-% des Antiagglomerationsmittel (Aerosil R 812, Evonik, Deutschland, bezogen auf das Endgewicht der herzustellenden Zusammensetzung), werden durch ein Rüttelsieb (Fa. Retsch, Maschenweite 245 µm) gesiebt und im Anschluss für 5 bis 20 Minuten in einem Taumelmischer (Turbula Typ T2F, Willy A. Bachofen AG, 70 bis 80 U/min) mit 100 g des Polymersystems (Elastollan EXP SP 9415, BASF) gemischt. Die Mischung wird nachfolgend über einen Zeitraum von etwa 5 bis 20 Minuten zu 2 kg des Polymersystems in einen Betonmischer (BM 140, Atika GmbH, Neigungswinkel 30°) eingemischt und im Anschluss in Kartonagen mit innenliegenden Foliensäcken verpackt.

### Beispiel 2:

Herstellung einer erfindungsgemäßen Zusammensetzung:
In gleicher Weise wie in Beispiel 1 wird eine erfindungsgemäße Zusammensetzung hergestellt, lediglich dass eine erste Mischung eines Polymers (Elastollan EXP SP 9415) mit einem ersten Antiagglomerationsmittel (HDK H20, Wacker Chemie, Deutschland) in oben beschriebener Weise hergestellt und in einem zweiten Schritt eine Mischung eines zweiten Antiagglomerationsmittels (Aerosil R 812, Evonik, Deutschland) mit einem Polymer (Elastollan EXP SP 9415) in oben beschriebener Weise hergestellt wird. Im Anschluss wird die erste Mischung analog zu Beispiel 1 in die gesamte Menge des Polymers (Elastollan EXP SP 9415) gemischt. Nachfolgend wird auch die zweite Mischung dem Polymer beigemischt und verpackt (wie in Beispiel 1 beschrieben). Die Endkonzentration des ersten Antiagglomerationsmittels in der Gesamtmischung liegt in diesem Fall bei bei 0,05 Gew.-%, die Endkonzentration des zweiten Antiagglomerationsmittels bei 0,15 Gew.-%.

### Beispiel 3:

Die Schüttdichte der Zusammensetzungen gemäß Beispiel 1 und 2 wird im Folgenden unter Verwendung einer Vorrichtung gemäß DIN EN ISO 60:2000-01 bestimmt.

Ein Trichter wird vertikal mit seiner unteren Öffnung 20 bis 30 mm so über einem Messzylinder (Volumen: 100 ml, Innendurchmesser 45 ± 5 mm, mit polierter Innenfläche) befestigt, dass dieser mit dessen Achse und der des Messzylinders zusammenfällt.

110 bis 120 ml der Zusammensetzungen (gemäß Beispiel 1 bzw. Beispiel 2) werden durch den Trichter gegeben, wobei dessen untere Öffnung durch eine Metallplatte verschlossen ist. Im Anschluss wird die Metallplatte zügig geöffnet, so dass die erfindungsgemäße Zusammensetzung in den Messzylinder abfließt. Der Überschuss der erfindungsgemäßen Zusammensetzung wird mit einem Stab vom Messzylinder abgestreift und im Anschluss der Messzylinder auf einer Waage (Fa. Kern, Deutschland) unter Berücksichtigung dessen Tara gewogen. Die hierbei ermittelten Schüttdichten sind in Tabelle 1 gezeigt.

**Tabelle 1: Ermittelte Schüttdichten der Zusammensetzungen.**

| erfindungsgemäße Zusammensetzung | Schüttdichte [g/l] |
|---|---|
| Beispiel 1 | 496 g/l |
| Beispiel 2 | 509 g/l |

## Patentansprüche

1. Zusammensetzung umfassend
(a) zumindest ein Polymersystem und
(b) zumindest zwei Antiagglomerationsmittel,
wobei das Polymersystem ausgewählt ist aus zumindest einem thermoplastischen Polymer, wobei das thermoplastische Polymer ausgewählt ist aus Polyetherimid, Polycarbonat, Polyphenylensulfon, Polyphenylenoxid, Polyethersulfon, Acrylnitril-Butadien-Styrol-Copolymerisat (ABS), Acrylnitril-Styrol-Acrylat-Copolymerisat (ASA), Polyvinylchlorid, Polyacrylat, Polyester, Polyamid, Polyaryletherketon, Polyether, Polyurethan, Polyimid, Polyamidimid und/oder Polyolefin, insbesondere aus Polyurethan, und wobei die Schüttdichte der Zusammensetzung mindestens 300 g/l, bevorzugt mindestens etwa 350 g/l, besonders bevorzugt mindestens etwa 420 g/l, insbesondere mindestens etwa 450 g/l, beträgt und/oder wobei die Schüttdichte bis zu etwa 550 g/l, bevorzugt bis zu etwa 530 g/l, insbesondere bis zu etwa 510 g/l, beträgt.
wobei ein erstes Antiagglomerationsmittel Siliziumdioxid, insbesondere pyrogenes Siliziumdioxid, umfasst und wobei die Partikel des ersten Antiagglomerationsmittels mit mindestens einem Hydrophobierungsmittel auf Basis von zumindest einem Organosilan modifiziert sind,
wobei ein zweites Antiagglomerationsmittel Siliziumdioxid, insbesondere pyrogenes Siliziumdioxid, umfasst und wobei die Partikel des zweiten Antiagglomerationsmittels mit mindestens einem Hydrophobierungsmittel auf Basis von zumindest einem Organosilan modifiziert sind.

2. Zusammensetzung gemäß Anspruch 1, wobei die Partikel des ersten Antiagglomerationsmittels mit einem ersten Hydrophobierungsmittel modifiziert sind, welches ausgewählt ist aus Alkoxysilan, Silazan und/oder Siloxan, insbesondere aus Polydimethylsiloxan und/oder Hexamethyldisilazan, insbesondere bevorzugt aus Hexamethyldisilazan.

3. Zusammensetzung gemäß einem der Ansprüche 1 und/oder 2, wobei die Partikel des zweiten Antiagglomerationsmittels mit einem zweiten Hydrophobierungsmittel modifiziert sind, welches ausgewählt ist aus Alkoxysilan, Silazan und/oder Siloxan, insbesondere aus Polydimethylsiloxan und/oder Hexamethyldisilazan, insbesondere bevorzugt aus Polydimethylsiloxan.

4. Zusammensetzung gemäß Anspruch 3, wobei die Partikel des ersten und/oder des zweiten Antiagglomerationsmittels mit Amino-, Amid und/oder quartären Ammonium-Endgruppen funktionalisiert sind.

5. Zusammensetzung gemäß einem der vorhergehenden Ansprüche, wobei das erste und das zweite Antiagglomerationsmittel ein Gewichtsverhältnis von mindestens etwa 1:1, bevorzugt von mindestens etwa 2:1, aufweisen, und/oder wobei das Gewichtsverhältnis des ersten Antiagglomerationsmittels zum zweiten Antiagglomerationsmittel bevorzugt bei höchstens etwa 1:3, besonders bevorzugt bei höchstens etwa 1:2, liegt.

6. Zusammensetzung gemäß einem der vorhergehenden Ansprüche, wobei das zumindest eine Antiagglomerationsmittel oder gegebenenfalls ein zweites Antiagglomerationsmittel insgesamt einen Gewichtsanteil an der Zusammensetzung von mindestens etwa 0,01 %, bevorzugt von mindestens etwa 0,03 %, aufweist/en, und/oder wobei der Gewichtsanteil des zumindest einen Antiagglomerationsmittels oder gegebenenfalls eines zweiten Antiagglomerationsmittels in der Zusammensetzung bei insgesamt höchstens etwa 1 %, bevorzugt bei höchstens etwa 0,8 %, insbesondere bei höchstens etwa 0,5 %, insbesondere bevorzugt bei höchstens etwa 0,2 %, liegt.

7. Zusammensetzung gemäß einem der vorhergehenden Ansprüche, wobei das zumindest eine Antiagglomerationsmittel und gegebenenfalls ein zweites Antiagglomerationsmittel eine BET-Oberfläche von mindestens etwa 200 m²/g, bevorzugt von mindestens etwa 230 m²/g, aufweist/en, und/oder wobei die BET-Oberfläche des zumindest einen Antiagglomerationsmittels und gegebenenfalls des zweiten Antiagglomerationsmittels bei höchstens etwa 350 m²/g, bevorzugt bei höchstens etwa 330 m²/g, liegt.

8. Zusammensetzung gemäß einem der vorhergehenden Ansprüche, wobei das zumindest eine Antiagglomerationsmittel und gegebenenfalls ein zweites Antiagglomerationsmittel einen mittleren Durchmesser der Agglomeratpartikel d50 von mindestens etwa 100 nm, bevorzugt von mindestens etwa 200 nm, insbesondere von mindestens etwa 250 nm, aufweist/en und/oder wobei der mittlere Durchmesser der Agglomeratpartikel d50 bei höchstens etwa 500 nm, bevorzugt bei höchstens etwa 400 nm, insbesondere bei höchstens etwa 300 nm, liegt.

9. Zusammensetzung gemäß einem der vorhergehenden Ansprüche, wobei der mittlere Durchmesser der Partikel d50 des zumindest einen Polymersystems zum mittleren Durchmesser der Agglomeratpartikel d50 des zumindest einen Antiagglomerationsmittels ein Verhältnis von mindestens etwa 100:1, bevorzugt von mindestens etwa 500:1, aufweist, und/oder wobei das Verhältnis des mittleren Durchmessers der Partikel d50 des zumindest einen Polymersystems zum mittleren Durchmesser der Agglomeratpartikel d50 des zumindest einen Antiagglomerationsmittels bei höchstens etwa 5000:1, bevorzugt bei höchstens etwa 1000:1, liegt.

10. Zusammensetzung gemäß einem der vorhergehenden Ansprüche, wobei das Polymersystem ein thermoplastisches Polyurethan umfasst.

11. Zusammensetzung gemäß einem der vorhergehenden Ansprüche, wobei der Schmelzpunkt der Zusammensetzung, bevorzugt umfassend zumindest ein thermoplastisches Polyurethan, bei mindestens etwa 100 °C und/oder bei höchstens etwa 200 °C liegt.

12. Zusammensetzung gemäß einem der vorhergehenden Ansprüche, wobei die Zusammensetzung eine Zugfestigkeit von mindestens etwa 5 MPa, bevorzugt von mindestens etwa 25 MPa, insbesondere von mindestens etwa 50 MPa, und/oder von höchstens etwa 150 MPa, bevorzugt von höchstens etwa 100 MPa, insbesondere von höchstens etwa 75 MPa, und eine Bruchdehnung von mindestens etwa 1 %, bevorzugt von mindestens etwa 5 %, insbesondere von mindestens etwa 50 %, und/oder von höchstens etwa 500 %, bevorzugt von höchstens etwa 250 %, insbesondere von höchstens etwa 100 %, aufweist.

13. Zusammensetzung gemäß einem der vorhergehenden Ansprüche, wobei der Zusammensetzung als weitere Komponenten zumindest ein Additiv zugesetzt ist.

14. Verfahren zur Herstellung einer Zusammensetzung gemäß einem der Ansprüche 1 bis 13, wobei das Verfahren folgende Schritte umfasst:
(i) Bereitstellen zumindest eines Polymersystems, wobei das zumindest eine Polymersystem ausgewählt ist aus zumindest einem thermoplastischen Polymer, wobei das thermoplastische Polymer ausgewählt ist aus Polyetherimid, Polycarbonat, Polyphenylensulfon, Polyphenylenoxid, Polyethersulfon, Acrylnitril-Butadien-Styrol-Copolymerisat (ABS), Acrylnitril-Styrol-Acrylat-Copolymerisat (ASA), Polyvinylchlorid, Polyacrylat, Polyester, Polyamid, Polyaryletherketon, Polyether, Polyurethan, Polyimid, Polyamidimid und/oder Polyolefin, insbesondere aus Polyurethan,
(ii) Zugabe eines ersten Antiagglomerationsmittels,
(iii) Mischen des zumindest einen Polymersystems mit dem ersten Antiaglomerationsmittel,
(iv) optional Verpacken der Zusammensetzung.

15. Herstellungsverfahren zum Herstellen eines Bauteils, insbesondere eines dreidimensionalen Objekts, durch schichtweises Aufbringen und selektives Verfestigen eines Aufbaumaterials, vorzugsweise eines Pulvers, mit den Schritten:
(i) Bereitstellen des Aufbaumaterials, vorzugsweise einer Zusammensetzung gemäß einem der Ansprüche 1 bis 13 und/oder hergestellt nach einem Verfahren nach Anspruch 14,
(ii) Aufbringen einer Schicht des Aufbaumaterials auf ein Baufeld,
(iii) selektives Verfestigen der aufgebrachten Schicht des Aufbaumaterials an Stellen, die einem Querschnitt des herzustellenden Objekts entsprechen, bevorzugt mittels einer Bestrahlungseinheit, und
(iv) Absenken des Trägers und Wiederholen der Schritte des Aufbringens und des Verfestigens, bis das Bauteil, insbesondere das dreidimensionale Objekt, fertiggestellt ist.

16. Zusammensetzung gemäß einem der Ansprüche 1 bis 13, wobei die Zusammensetzung nach einem Verfahren gemäß Anspruch 14 erhältlich ist.

17. Bauteil, insbesondere dreidimensionales Objekt, hergestellt aus einer Zusammensetzung gemäß einem der Ansprüche 1 bis 13, wobei das Bauteil nach einem Verfahren gemäß Anspruch 15 erhältlich ist.

18. Zusammensetzung gemäß einem der Ansprüche 1 bis 13 zur Verwendung für additive Fertigungsprozesse, bevorzugt aus der Gruppe von Pulverbett-basierten Verfahren umfassend Lasersintern, Highspeed-Sintern, Multi-Jet Fusion, Binder Jetting, selektives Maskensintern oder selektives Laserschmelzen, insbesondere zur Verwendung für Lasersintern.

19. Verwendung einer Zusammensetzung, die nach einem Verfahren gemäß Anspruch 14 hergestellt wurde, als verfestigbares Pulvermaterial in einem Verfahren zur schichtweisen Herstellung eines dreidimensionalen Objekts aus pulverförmigem Material, bei dem aufeinander folgende Schichten des zu bildenden Objekts aus diesem verfestigbaren Pulvermaterial nacheinander an entsprechenden Stellen durch den Eintrag von Energie verfestigt werden, bevorzugt durch den Eintrag von elektromagnetischer Strahlung, insbesondere durch den Eintrag von Laserlicht.

## Claims

1. A composition comprising
(a) at least one polymer system and
(b) at least two anti-agglomeration agents,
the polymer system being selected from at least one thermoplastic polymer, the thermoplastic polymer being selected from polyetherimide, polycarbonate, polyphenylene sulfone, polyphenylene oxide, polyether sulfone, acrylonitrile-butadiene-styrene copolymer (ABS), acrylonitrile-styrene-acrylate copolymer (ASA), polyvinyl chloride, polyacrylate, polyester, polyamide, polyaryl ether ketone, polyether, polyurethane, polyimide, polyamide imide and/or polyolefin, in particular of polyurethane, and the bulk density of the composition being at least 300 g/l, preferably at least about 350 g/l, particularly preferably at least about 420 g/l, in particular at least about 450 g/l, and/or the bulk density being up to about 550 g/l, preferably up to about 530 g/l, in particular up to about 510 g/l,
wherein a first anti-agglomeration agent comprises silicon dioxide, in particular pyrogenic silicon dioxide, and wherein the particles of the first anti-agglomeration agent are modified with at least one hydrophobizing agent based on at least one organosilane,
wherein a second anti-agglomeration agent comprises silicon dioxide, in particular pyrogenic silicon dioxide, and wherein the particles of the second anti-agglomeration agent are modified with at least one hydrophobizing agent based on at least one organosilane.

2. The composition according to claim 1, wherein the particles of the first anti-agglomeration agent are modified with a first hydrophobizing agent which is selected from alkoxysilane, silazane and/or siloxane, in particular from polydimethylsiloxane and/or hexamethyldisilazane, particularly preferably from hexamethyldisilazane.

3. The composition according to any one of claims 1 and/or 2, wherein the particles of the second anti-agglomeration agent are modified with a second hydrophobizing agent which is selected from alkoxysilane, silazane and/or siloxane, in particular from polydimethylsiloxane and/or hexamethyldisilazane, particularly preferably from polydimethylsiloxane.

4. The composition according to claim 3, wherein the particles of the first and/or the second anti-agglomeration agent are functionalized with amino, amide and/or quaternary ammonium end groups.

5. The composition according to any one of the preceding claims, wherein the first and the second anti-agglomeration agent have a weight ratio of at least about 1:1, preferably of at least about 2:1, and/or wherein the weight ratio of the first anti-agglomeration agent to the second anti-agglomeration agent is preferably at most about 1:3, more preferably at most about 1:2.

6. The composition according to any one of the preceding claims, wherein the at least one anti-agglomeration agent or optionally a second anti-agglomeration agent has/have in total a proportion by weight of the composition of at least about 0.01 %, preferably at least about 0.03 %, and/or wherein the proportion by weight of the at least one anti-agglomeration agent or optionally a second anti-agglomeration agent in the composition is in total at most about 1%, preferably at most about 0.8 %, in particular at most about 0.5 %, particularly preferably at most about 0.2 %.

7. The composition according to any one of the preceding claims, wherein the at least one anti-agglomeration agent and optionally a second anti-agglomeration agent has/have a BET surface area of at least about 200 m²/g, preferably of at least about 230 m²/g, and/or wherein the BET surface area of the at least one anti-agglomeration agent and optionally the second anti-agglomeration agent is at most about 350 m²/g, preferably at most about 330 m²/g.

8. The composition according to any one of the preceding claims, wherein the at least one anti-agglomeration agent and optionally a second anti-agglomeration agent has/have an average diameter of the agglomerate particles d50 of at least about 100 nm, preferably at least about 200 nm, in particular at least about 250 nm, and/or wherein the average diameter of the agglomerate particles d50 is at most about 500 nm, preferably at most about 400 nm, in particular at most about 300 nm.

9. The composition according to any one of the preceding claims, wherein the average diameter of the particles d50 of the at least one polymer system to the average diameter of the agglomerate particles d50 of the at least one anti-agglomeration agent has a ratio of at least about 100:1, preferably at least about 500:1, and/or wherein the ratio of the average diameter of the particles d50 of the at least one polymer system to the average diameter of the agglomerate particles d50 of the at least one anti-agglomeration agent is at most about 5000:1, preferably at most about 1000:1.

10. The composition according to any of the preceding claims, wherein the polymer system comprises a thermoplastic polyurethane.

11. The composition according to any one of the preceding claims, wherein the melting point of the composition, preferably comprising at least one thermoplastic polyurethane, is at least about 100 °C and/or at most about 200 °C.

12. The composition according to any one of the preceding claims, wherein the composition has a tensile strength of at least about 5 MPa, preferably at least about 25 MPa, in particular at least about 50 MPa, and/or at most about 150 MPa, preferably at most about 100 MPa, in particular of at most about 75 MPa, and an elongation at break of at least about 1 %, preferably at least about 5 %, in particular at least about 50 %, and/or at most about 500 %, preferably at most about 250 %, in particular at most about 100 %.

13. The composition according to any one of the preceding claims, wherein at least one additive is added to the composition as further components.

14. A method of producing a composition according to any one of claims 1 to 13, the method comprising the following steps:
(i) providing at least one polymer system, the at least one polymer system being selected from at least one thermoplastic polymer, the thermoplastic polymer being selected from polyetherimide, polycarbonate, polyphenylene sulfone, polyphenylene oxide, polyether sulfone, acrylonitrile-butadiene-styrene copolymer (ABS), acrylonitrile-styrene acrylate copolymer (ASA), polyvinyl chloride, polyacrylate, polyester, polyamide, polyaryl ether ketone, polyether, polyurethane, polyimide, polyamideimide and/or polyolefin, in particular from polyurethane,
(ii) adding a first anti-agglomeration agent,
(iii) mixing the at least one polymer system with the first anti-agglomeration agent,
(iv) optionally packaging the composition.

15. A production method for producing an article, in particular a three-dimensional object, by applying layers and selectively solidifying a construction material, preferably a powder, having the steps:
(i) providing the construction material, preferably a composition according to any one of claims 1 to 13 and/or produced by a method according to claim 14,
(ii) applying a layer of the construction material to a construction field,
(iii) selectively solidifying the applied layer of the construction material at locations which correspond to a cross section of the object to be produced, preferably by means of an irradiation unit, and
(iv) lowering the carrier and repeating the steps of applying and solidifying until the component, in particular the three-dimensional object, is completed.

16. The composition according to any one of claims 1 to 13, the composition being obtainable by a method according to claim 14.

17. An article, in particular three-dimensional object, produced from a composition according to any one of claims 1 to 13, the article being obtainable by a method according to claim 15.

18. The composition according to any one of claims 1 to 13 for use in additive manufacturing processes, preferably from the group of powder bed-based processes comprising laser sintering, high-speed sintering, multi-jet fusion, binder jetting, selective mask sintering or selective laser melting, in particular for use for laser sintering.

19. A use of a composition which has been produced by a method according to claim 14, as a solidifiable powder material in a method for the layer-by-layer production of a three-dimensional object from powdery material, in which successive layers of the object to be formed from this solidifiable powder material are successively solidified at corresponding locations by the input of energy, preferably by the input of electromagnetic radiation, in particular by the input of laser light.

## Revendications

1. Composition comprenant
(a) au moins un système polymère et
(b) au moins deux agents anti-agglomérants,
le système polymère étant sélectionné parmi au moins un polymère thermoplastique, le polymère thermoplastique étant sélectionné parmi un polyétherimide, un polycarbonate, une polyphénylène sulfone, un polyphénylène oxyde, une polyéther sulfone, un copolymère d'acrylonitrile-butadiène-styrène (ABS), un copolymère d'acrylonitrile-styrène-acrylate (ASA), un polychlorure de vinyle, un polyacrylate, un polyester, un polyamide, une polyaryléthercétone, un polyéther, un polyuréthane, un polyimide, un polyamide-imide et / ou une polyoléfine, notamment un polyuréthane, et la masse volumique apparente de la composition étant d'au moins 300 g/l, de manière préférentielle d'au moins environ 350 g/l, de manière particulièrement préférentielle, d'au moins environ 420 g/l, notamment d'au moins environ 450 g/l, et / ou la masse volumique apparente étant de jusqu'à environ 550 g/l, de manière préférentielle de jusqu'à environ 530 g/l, notamment de jusqu'à environ 510 g/l,.
un premier agent anti-agglomérant comprenant du dioxyde de silicium, notamment du dioxyde de silicium pyrogène et les particules du premier agent anti-agglomérant étant modifiées avec au moins un agent hydrophobisant à base d'au moins un organosilane, un deuxième agent anti-agglomérant comprenant du dioxyde de silicium, notamment du dioxyde de silicium pyrogène et les particules du deuxième agent anti-agglomérant étant modifiées avec au moins un agent hydrophobisant à base d'au moins un organosilane.

2. Composition selon la revendication 1, les particules du premier agent anti-agglomérant étant modifiées avec un premier agent hydrophobisant, lequel est sélectionné parmi un alkoxysilane, un silazane et / ou un siloxane, notamment un polydiméthylsiloxane et / ou un hexaméthyldisilazane, notamment de manière préférentielle un hexaméthyldisilazane.

3. Composition selon l'une quelconque des revendications 1 et / ou 2, les particules du deuxième agent anti-agglomérant étant modifiées avec un deuxième agent hydrophobisant, lequel est sélectionné parmi un alkoxysilane, un silazane et / ou un siloxane, notamment un polydiméthylsiloxane et / ou un hexaméthyldisilazane, notamment de manière préférentielle un polydiméthylsiloxane.

4. Composition selon la revendication 3, les particules du premier et / ou du deuxième agent anti-agglomérant étant fonctionnalisées par des groupes terminaux amino, amide et / ou ammonium quaternaire.

5. Composition selon l'une quelconque des revendications précédentes, le premier et le deuxième agents anti-agglomérants présentant un rapport en poids d'au moins environ 1 : 1, de manière préférentielle d'au moins environ 2 : 1, et / ou le rapport en poids du premier agent anti-agglomérant au deuxième agent anti-agglomérant se situant de manière préférentielle à au plus environ 1 : 3, de manière particulièrement préférentielle, à au plus environ 1 : 2.

6. Composition selon l'une quelconque des revendications précédentes, l'au moins un agent anti-agglomérant ou le cas échéant un deuxième agent anti-agglomérant présentant au total une part en poids de la composition d'au moins environ 0,01 %, de manière préférentielle d'au moins environ 0,03 %, et / ou la part en poids de l'au moins un agent anti-agglomérant ou le cas échéant, d'un deuxième agent anti-agglomérant dans la composition se situant au total à au plus environ 1 %, de manière préférentielle à au plus environ 0,8 %, notamment à au plus environ 0,5 %, notamment de manière préférentielle à au plus environ 0,2 %.

7. Composition selon l'une quelconque des revendications précédentes, l'au moins un agent anti-agglomérant et le cas échéant un deuxième agent anti-agglomérant présentant une surface BET d'au moins environ 200 m²/g, de manière préférentielle, d'au moins environ 230 m²/g, et / ou la surface BET de l'au moins un agent anti-agglomérant et le cas échéant du deuxième agent anti-agglomérant se situant à au plus environ 350 m²/g, de manière préférentielle à au plus environ 330 m²/g.

8. Composition selon l'une quelconque des revendications précédentes, l'au moins un agent anti-agglomérant et le cas échéant un deuxième agent anti-agglomérant présentant un diamètre moyen de l'agglomérat de particules d50 d'au moins environ 100 nm, de manière préférentielle, d'au moins environ 200 nm, notamment d'au moins environ 250 nm, et / ou le diamètre moyen de l'agglomérat de particules d50 se situant à au plus environ 500 nm, de manière préférentielle, à au plus environ 400 nm, notamment à au plus environ 300 nm.

9. Composition selon l'une quelconque des revendications précédentes, le diamètre moyen des particules d50 de l'au moins un système polymère présentant un rapport au diamètre moyen de l'agglomérat de particules d50 de l'au moins un agent anti-agglomérant d'au moins environ 100 : 1, de manière préférentielle, d'au moins environ 500 : 1 , et / ou le rapport du diamètre moyen des particules d50 de l'au moins un système polymère au diamètre moyen de l'agglomérat de particules d50 de l'au moins un agent anti-agglomérant se situant à au plus environ 5000 : 1, de manière préférentielle à au plus environ 1000 : 1.

10. Composition selon l'une quelconque des revendications précédentes, le système polymère comprenant un polyuréthane thermoplastique.

11. Composition selon l'une quelconque des revendications précédentes, le point de fusion de la composition, comprenant de manière préférentielle au moins un polyuréthane thermoplastique se situant à au moins environ 100 °C et / ou à au plus environ 200 °C.

12. Composition selon l'une quelconque des revendications précédentes, la composition faisant preuve d'une résistance à la traction d'au moins environ 5 MPa, de manière préférentielle, d'au moins environ 25 MPa, notamment d'au moins environ 50 MPa, et / ou d'au plus environ 150 MPa, de manière préférentielle, d'au plus environ 100 MPa, notamment d'au plus environ 75 MPa et d'un allongement à la rupture d'au moins environ 1 %, de manière préférentielle, d'au moins environ 5 %, notamment d'au moins environ 50 %, et / ou d'au plus environ 500 %, de manière préférentielle, d'au plus environ 250 %, notamment d'au plus environ 100 %.

13. Composition selon l'une quelconque des revendications précédentes, à la composition étant ajouté au moins un additif en tant que composant supplémentaire.

14. Procédé, destiné à préparer une composition selon l'une quelconque des revendications 1 à 13, le procédé comprenant les étapes suivantes:
(i) mettre à disposition au moins un système polymère, l'au moins un système polymère étant sélectionné parmi au moins au moins un polymère thermoplastique, le polymère thermoplastique étant sélectionné parmi un polyétherimide, un polycarbonate, une polyphénylène sulfone, un polyphénylène oxyde, une polyéther sulfone, un copolymère d'acrylonitrile-butadiène-styrène (ABS), un copolymère d'acrylonitrile-styrène-acrylate (ASA), un polychlorure de vinyle, un polyacrylate, un polyester, un polyamide, une polyaryléthercétone, un polyéther, un polyuréthane, un polyimide, un polyamide-imide et / ou une polyoléfine, notamment un polyuréthane,
(ii) ajouter un premier agent anti-agglomérant,
(iii) mélanger l'au moins un système polymère avec le premier agent anti-agglomérant,
(iv) en option, emballer la composition.

15. Procédé de fabrication, destiné à fabriquer un élément structurel, notamment un objet tridimensionnel, par application couche par couche et consolidation sélective d'une matière constitutive, de préférence d'une poudre, avec les étapes:
(i) mettre à disposition la matière constitutive, de préférence une composition selon l'une quelconque des revendications 1 à 13 et / ou préparée d'après un procédé selon la revendication 14,
(ii) appliquer une couche de la matière constitutive sur une zone de fabrication,
(iii) consolider sélectivement la couche appliquée de la matière constitutive sur des endroits qui correspondent à une section transversale de l'objet qui doit être fabriqué, de manière préférentielle au moyen d'une unité d'irradiation, et
(iv) abaisser le support et réitérer les étapes résidant dans l'application et dans la consolidation, jusqu'à ce que l'élément structurel, notamment l'objet tridimensionnel soit achevé.

16. Composition selon l'une quelconque des revendications 1 à 13, la composition étant susceptible d'être obtenue d'après un procédé selon la revendication 14.

17. Composant notamment objet tridimensionnel, fabriqué à partir d'une composition selon l'une quelconque des revendications 1 à 13, le composant étant susceptible d'être obtenu d'après un procédé selon la revendication 15.

18. Composition selon l'une quelconque des revendications 1 à 13, destinée à être utilisée pour des processus de fabrication additive, de manière préférentielle du groupe des procédés à lit de poudre, comprenant le frittage laser, le frittage à grande vitesse, la fusion multi jets, le dépôt de liant, le frittage sélectif sous masque ou la fusion sélective par laser, destinée notamment à l'utilisation pour le frittage laser.

19. Utilisation d'une composition qui a été préparée d'après un procédé selon la revendication 14 en tant que matière pulvérulente consolidable dans un procédé de fabrication couche par couche d'un objet tridimensionnel en une matière pulvérulente, lors duquel l'on consolide successivement sur des endroits correspondants des couches successives de ladite matière pulvérulente consolidable de l'objet qui doit être constitué par l'apport d'une énergie, de manière préférentielle par l'apport d'un rayonnement électromagnétique, notamment par l'apport d'une lumière laser.
